# EUROPÄISCHE PATENTSCHRIFT

(11) **EP 2 234 862 B1**
(45) Veröffentlichungstag und Bekanntmachung des Hinweises auf die Patenterteilung: **13.03.2013**
(21) Anmeldenummer: 09772044.5
(22) Anmeldetag: 29.01.2009
(51) Int. Cl.: B62D 5/00

(54) **ELEKTRISCHE SERVOLENKUNG**
ELECTRIC POWER STEERING
SERVO-DIRECTION ÉLECTRIQUE

(30) Priorität: 01.02.2008 DE 102008000213
(43) Veröffentlichungstag der Anmeldung: 06.10.2010
(73) Patentinhaber: ZF-Lenksysteme GmbH, 73527 Schwäbisch Gmünd (DE)
(72) Erfinder: HÖRSCH, Jürgen, 74417 Gschwend (DE); RUPP, Arthur, 73460 Hüttlingen (DE); KRUTTSCHNITT, Andreas, 89522 Heidenheim (DE); NUSSBAUMER, Jochen, 73550 Waldstetten (DE); RUNGE, Wolfgang, 88214 Ravensburg (DE)
(86) Internationale Anmeldenummer: PCT/EP2009/000555
(87) Internationale Veröffentlichungsnummer: WO 2010/000344

(56) Entgegenhaltungen:
- EP-A- 0 814 012
- EP-A- 1 344 709
- US-A- 4 577 715

## Beschreibung

Die Erfindung betrifft eine elektrische Servolenkung, insbesondere eine Hilfskraftlenkung für ein Fahrzeug, nach dem Oberbegriff des Anspruchs 1.

Die DT 21 58594 beschreibt eine Hilfskraftlenkung für ein Fahrzeug mit einem Lenkgetriebe in dessen Lenkgetriebegehäuse ein als Zahnstange ausgebildetes, axial verlagerbares Bauteil geführt ist. Die Zahnstange ist radial in dem Lenkgetriebegehäuse durch eine Führungsbuchse gelagert, wobei die Führungsbuchse in der Lage ist, eine Durchbiegung der Zahnstange durch Winkelversatz zu kompensieren. Die Aufhängung der Führungsbuchse in dem Lenkgetriebegehäuse ist aufwändig. Die Führungsbuchse ist mittels eines festen Bundes radial in einer Aufnahmebohrung einer das Lenkgetriebegehäuse abschließenden Muffe abgestützt. Dabei ist eine der Führungsbuchse aufvulkanisierte Gummimanschette mit ihrer zum Teil konisch verlaufenden, zum Teil mit Längsnuten versehenen Mantelfläche so in die Aufnahmebohrung eingepresst, dass die Führungsbuchse einerseits mit ihrem Bund an einem Absatz der Aufnahmebohrung axial anliegt und dabei einen endseitig in der Aufnahmebohrung angeordneten, die Zahnstange abdichtenden Dichtring axial sichert, andererseits von einer zwischen einem Zylinderrohr und der Muffe festliegenden Scheibe gesichert ist.

Ähnlich aufwändige Radialführungen von Zahnstangen sind bei elektrischen Servolenkungen bekannt.

Die EP1344709 offehbart eine elektrische Servelenkung nach dem Oberbegriff des Anspruchs 1.

Der Erfindung liegt die Aufgabe zugrunde, eine elektrische Servolenkung anzugeben, die einfach zu montieren ist und verschleißunanfällig und störsicher ist.

Die Aufgabe wird mit einer elektrischen Servolenkung mit den Merkmalen des Anspruchs 1 gelöst.

Dadurch daß nicht in einem Lenkgetriebegehäuse sondern in einem dieses axial abschließenden Gehäusedeckel, der bei der Montage des Lenkgetriebes vorzugsweise zuletzt aufgesetzt wird, eine erste Führungsbuchse für das axial verlagerbare Bauteil bereits integriert ist, ist eine einfache Montage der elektrischen Servolenkung gegeben.

Bevorzugte Ausführungen ergeben sich aus den Unteransprüchen.

In einem besonders bevorzugten Ausführungsbeispiel ist die Führungsbuchse als Einlegeteil in der Art eines Kerns beispielsweise in eine Kokillenform für den Gehäusedeckel eingelegt und wird beim Guß des Gehäusedeckels formschlüssig und/oder stoffschlüssig in dem Gehäusedeckel festgelegt.

In gleicher oder verschiedener Weise kann eine zweite Führungsbuchse in dem Gehäusedeckel und/oder in dem Lenkgetriebegehäuse angeordnet werden. Die Führungsbuchsen sind bevorzugt einteilig gebildet und haben eine Axialanschlagsfunktion für die Zahnstange.

Bevorzugt hat die erste und/oder zweite Führungsbuchse ein Verhältnis ihres Führungsdurchmessers zur Breite der Führungsbuchse zwischen 0,3 und 3,5. Ferner ist bevorzugt ein Verhältnis der Wandstärke der ersten und/oder zweiten Führungsbuchse zu ihrem Aussendurchmesser von 0,01 bis 0,3 gewählt um ein Klemmen der Zahnstange bei Biegung zu vermeiden.

Das axial verlagerbare Bauteil in der Führungsbuchse kann durch eine geeignete Wahl des Querschnittsprofils der Führungsbuchse in einer Linienführung geführt sein. Dazu eignet sich ein Polygonprofil oder die Ausbildung der Führungsbuchse als Rollenlager. Durchmessertoleranzen der Zahnstange lassen sich dadurch in gewissen Bereichen kompensieren.

Es kann zweckmäßig sein, die Führungsbuchse in dem Gehäusedeckel und/oder in dem Lenkgetriebegehäuse radialelastisch zu lagern oder mit Spiel in dem Gehäusedeckel oder dem Lenkgetriebegehäuse zu lagern, wobei unter Last die Führungsbuchse dann an dem Gehäusedeckel oder dem Lenkgetriebegehäuse anliegt.

Die Führungsbuchsen lassen sich auch axial positionieren und fixieren, wobei insbesondere eine Einrichtung zur Einstellung und Feststellung der radialen Position in dem Gehäusedeckel oder dem Lenkgetriebegehäuse angewandt ist, die beispielsweise aus drei Stellschrauben mit tangentialem Abstand relativ zu der Mantelfläche der Führungsbuchsen die radiale Position der Führungsbuchsen in dem Gehäusedeckel bestimmen können. Als alternative Stellelemente zu den Schrauben eignen sich auch Exzenter, doppelte Exzenter und dergleichen. Die Führungsbuchsen lassen sich nach der Positionierung mit Schrauben verspannen oder vernieten, verstemmen, verschweißen oder verkleben. Ein Hohlraum radial zwischen der äußeren Mantelfläche der Führungsbuchsen und dem Gehäusedeckel eignet sich zum Einbringen einer elastomer auspolymerisierenden oder -kondensierenden Masse oder einer erstarrenden Masse, um die Führungsbuchsen abschließend radial und axial zu fixieren. Vorzugsweise sind die Führungsflächen der ersten und/oder zweiten Führungsbuchse so geformt, dass sie ein von der Kreisform so abweichendes Querschnittsprofil haben, dass sie eine Verdrehsicherung des axial verlagerbaren Bauteils bewirken. Zudem kann das Querschnittsprofil der äußeren oder inneren Mantelflächen der Führungsbuchsen so gestaltet sein, dass eine linienförmige Anlage des axial verlagerbaren Bauteiles an der jeweiligen Führungsbuchse oder eine linienförmige Anlage der Führungsbuchse an dem Gehäusedeckel oder Lenkgetriebegehäuse bewirkt ist.

Die äußeren und/oder inneren Mantelflächen der Führungsbuchsen können auch ballig gebildet sein, sodaß eine Schiefstellung des axial verlagerbaren Bauteiles oder der Zahnstange bei Biegung und ein Folgen der Führungsbuchse der Biegelinie der Zahnstange ermöglicht ist.

Der elektrische Servomotor treibt bevorzugt einen Kugelumlauftrieb an, wobei es zweckmäßig sein kann, um insbesondere im Axialbereich der Zahnstange an dem Kugelumlauftrieb eine Radialführung zu bewirken, wenn der Kopfkreis des Kugelumlauftriebs so geformt ist, dass dieser zur radialen Lagerung der Zahnstange herangezogen werden kann. Die Führungsbuchse im Bereich des Kugelumlauftriebes lässt sich radialelastisch lagern, während die endseitig im Gehäusedeckel angeordnete Führungsbuchse starr angeordnet sein kann.

Es kann auch zweckmäßig sein, den Kugelumlauftrieb so zu gestalten, dass ein Gehäuse dazu mehrteilig gebildet ist und radial ausrichtbar und fixierbar ist. Es kann auch zweckmäßig sein, die Führungsbuchsen als passiven Kugelumlauftrieb zu bilden.

Die Führungsbuchsen sind dauergeschmiert mit Schmiernuten oder Schmiertaschen. Als Werkstoff für die Führungsbuchsen eignet sich Kunststoff, wie Polyamide, Polyoxymethylen, Polyphenylenether, Polyethylenterephtalat und Polybuthylenterephtalat, sowie Verbundwerkstoffe aus Metall und Kunststoff oder geeignete Lagermetalle.

Es kann zweckmäßig sein, baugleiche Führungsbuchsen an den axialen Enden des Lenkgetriebegehäuses anzuordnen.

Die Erfindung wird nun näher anhand eines Ausführungsbeispiels beschrieben und anhand der beiliegenden Zeichnung wiedergegeben. In der Zeichnung zeigt:

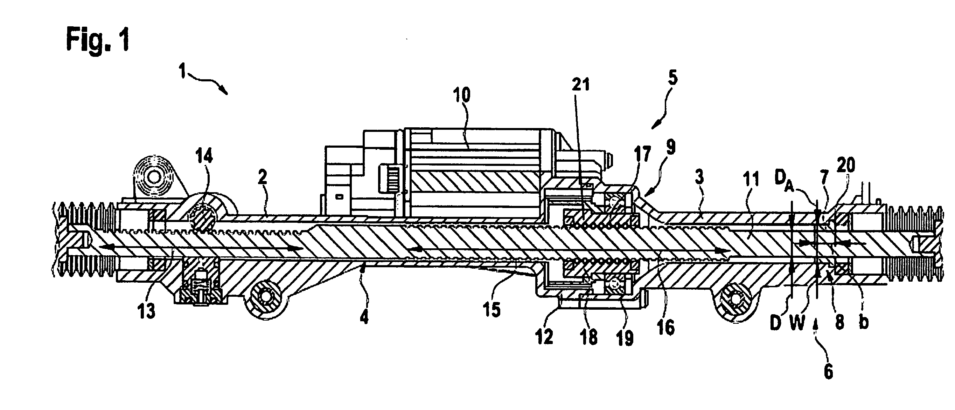

Fig. 1 einen Längsschnitt durch eine erfindungsgemäße elektrische Servolenkung.

In Fig. 1 ist in einem Längsschnitt eine als Zahnstangen-Hilfskraftlenkung gebildete elektrische Servolenkung 1 für einen Personenkraftwagen gezeigt. In einem zylinderförmigen Lenkgetriebegehäuse 2 eines Lenkgetriebes 5 ist ein als Zahnstange 11 gebildetes, axial verlagerbares Bauteil 4 gelagert. Parallel zu der Zahnstange 11 ist an einem Radialflansch 12 des Lenkgetriebegehäuses 2 ein elektrischer Servomotor 10 festgelegt. Die Zahnstange 11 kämmt an einem Verzahnungsabschnitt 13 mit einem Ritzel 14 einer Lenkwelle und weist ein Gewinde 15 an einem Spindelabschnitt 16 auf, welches in Eingriff mit einem Kugelumlaufgewinde 17 einer Mutter 18 eines Kugelumlauftriebs 9 ist. Die Mutter 18 ist drehfest mit einer Zahnriemenscheibe verbunden, die Teil eines im Bereich des Radialflansches 12 untergebrachten Zugmittelgetriebes ist. In einem annähernd so langen Gehäusedeckel 3, der zylinderförmig gebildet ist, ist ein Radiallager 19 für die Mutter 18 gehalten.

In einem axial äußeren Bereich 6 des einstückig als Leichtmetallgussteil gebildeten Gehäusedeckels 3 ist eine erste Führungsbuchse 7 in dem Gehäusedeckel 3 integriert. Die Führungsbuchse 7 dient als Radialführung für die Zahnstange 11 und ist zylinderförmig mit einem Bund 20 gebildet. Die Führungsbuchse 7 ist als Einlegeteil 8 aus Metall in eine Kokillenform gelegt und wird von Leichtmetall, das den Gehäusedeckel 3 bildet, umgossen, sodaß es formschlüssig mit dem Gehäusedeckel 3 verbunden ist und in diesem integriert ist.

Der Führungsdurchmesser D ist im Verhältnis zur Breite b der Führungsbuchse 7 etwa im Verhältnis 0,3 bis 3,5 gewählt. Die Wandstärke der Führungsbuchse 7 ist im Verhältnis zu ihrem Außendurchmesser D_{A} zwischen 0,01 bis 0,3 gewählt. Ohne dass eine aufwändige Montage und Justage der Führungsbuchse 7 nötig wäre, lässt sich diese zusammen mit dem Gehäusedeckel 3 rasch montieren und durch den Gehäusedeckel 3 an dem Radialflansch 12 justieren.

## Patentansprüche

1. Elektrische Servolenkung, insbesondere Hilfskraftlenkung für ein Fahrzeug, mit, einem Lenkgetriebegehäuse (2) und einem, einen axialen Verschluss des Lenkgetriebegehäuses (2) bildenden Gehäusedeckel (3), der von einem axial verlagerbaren Bauteil (4) des Lenkgetriebes (5) durchragt wird, wobei in einem axial äußeren Bereich (6) des Gehäusedeckels (3) eine erste Führungsbuchse (7) für das axial verlagerbare Bauteil (4) in dem Gehäusedeckel (3) integriert ist,
**gekennzeichnet durch folgende Merkmale:**
● eine zweite Führungsbuchse (21) ist mit axialem Abstand zu der ersten Führungsbuchse (7) angeordnet
● dass das Querschnittsprofil der ersten und/oder zweiten Führungsbuchse (7; 21) so gebildet ist, dass eine Linienberührung des axial verlagerbaren Bauteils (4) ermöglicht ist.

2. Elektrische Servolenkung nach Anspruch 1, **dadurch gekennzeichnet, dass** die erste Führungsbuchse (7) als Einlegeteil (8) in einer Gussform für den Gehäusedeckel (3) mit dem Gehäusedeckel (3) vergossen ist.

3. Elektrische Servolenkung nach einem der Ansprüche 1 oder 2, **dadurch gekennzeichnet, dass** die erste Führungsbuchse (7) in dem Gehäusedeckel (3) und/oder in dem Lenkgetriebegehäuse (2) integriert ist.

4. Elektrische Servolenkung nach einem der Ansprüche 1 bis 3, **dadurch gekennzeichnet, dass** die erste und/oder zweite Führungsbuchse (7; 21) einteilig gebildet ist.

5. Elektrische Servolenkung nach einem der Ansprüche 1 bis 4, **dadurch gekennzeichnet, dass** die erste Führungsbuchse (7) einen Axialanschlag für das axial verlagerbare Bauteil (6) bildet.

6. Elektrische Servolenkung nach einem der Ansprüche 1 bis 5, **dadurch gekennzeichnet, dass** die erste und/oder zweite Führungsbuchse (7; 21) ein Verhältnis ihres Führungsdurchmessers (D) zur Breite (b) von 0,3 bis 3,5 aufweist.

7. Elektrische Servolenkung nach einem der Ansprüche 1 bis 6, **dadurch gekennzeichnet, dass** die erste und/oder zweite Führungsbuchse (7; 21) ein Verhältnis ihrer Wandstärke (W) zu ihrem Außendurchmesser (D_{A}) von 0,01 bis 0,3 aufweist.

8. Elektrische Servolenkung nach einem der Ansprüche 1 bis 7, **dadurch gekennzeichnet, dass** die erste und/oder zweite Führungsbuchse (7; 21) radialelastisch gelagert ist.

9. Elektrische Servolenkung nach einem der Ansprüche 1 bis 8, **dadurch gekennzeichnet, dass** die erste und/oder zweite Führungsbuchse (7;21) in radialer Richtung zu dem axial verlagerbaren Bauteil (4) positionierbar und fixierbar in dem Gehäusedeckel (3) und/oder in dem Lenkgetriebegehäuse (2) angeordnet ist.

10. Elektrische Servolenkung nach Anspruch 9, **dadurch gekennzeichnet, dass** die erste und/oder zweite Führungsbuchse (7; 21) mit Hilfe einer Einrichtung zur Feststellung der radialen Position positioniert ist.

11. Elektrische Servolenkung nach Anspruch 10, **dadurch gekennzeichnet, dass** die Einrichtung zur Feststellung der radialen Position aus zumindest drei Stellschrauben gebildet ist, die in radialer Richtung auf die erste und/oder zweite Führungsbuchse (7; 21) wirken.

12. Elektrische Servolenkung nach Anspruch 11, **dadurch gekennzeichnet, dass** die Einrichtung durch ein oder mehrere Exzenter gebildet ist.

13. Elektrische Servolenkung nach einem de Ansprüche 1 bis 12, **dadurch gekennzeichnet, dass** die erste und/oder zweite Führungsbuchse (7; 21) in dem Gehäusedeckel (3) und/oder in dem Lenkgetriebegehäuse (2) mit Schrauben verspannt ist, oder vernietet ist, oder verstemmt ist, oder verschweißt ist oder verklebt ist.

14. Elektrische Servolenkung nach einem der Ansprüche 1 bis 13, **dadurch gekennzeichnet, dass** ein radial um die erste und/oder zweite Führungsbuchse (7; 21) angeordneter Hohlraum zwischen der ersten und/oder zweiten Führungsbuchse (7; 21) und dem Gehäusedeckel (3) und/oder in dem Lenkgetriebegehäuse (2) mit einer elastisch oder unelastisch erstarrenden Masse gefüllt ist.

15. Elektrische Servolenkung nach einem der Ansprüche 1 bis 14, **dadurch gekennzeichnet, dass** die erste und/oder zweite Führungsbuchse (7; 21) Führungsflächen für das axial verlagerbare Bauteil (4) aufweist, die eine Verdrehsicherung des axial verlagerbaren Bauteils (4) bewirken.

16. Elektrische Servolenkung nach einem der Ansprüche 1 bis 15, **dadurch gekennzeichnet, dass** die erste und/oder zweite Führungsbuchse (7; 21) eine in Umfangsrichtung ihrer Mantelflächen linienförmige Anlage des axial verlagerbaren Bauteils (4) an der ersten und/oder zweiten Führungsbuchse (7; 21) und/oder eine linienförmige Anlage der ersten und/oder zweiten Führungsbuchse (7; 21) an dem Gehäusedeckel (3) oder Lenkgetriebegehäuse (2) ermöglicht.

17. Elektrische Servolenkung nach Anspruch 16, **dadurch gekennzeichnet, dass** die erste und/oder zweite Führungsbuchse (7; 21) ballig gebildet ist.

18. Elektrische Servolenkung nach einem der Ansprüche 1 bis 17, **dadurch gekennzeichnet, dass** das axial verlagerbare Bauteil (4) über einen Kugelumlauftrieb (9) von einem elektrischen Servomotor (10) angetrieben ist und der Kopfkreis des Kugelumlauftriebs (9) so geformt ist, dass dieser zur radialen Lagerung des axial verlagerbaren Bauteils (4) dient.

19. Elektrische Servolenkung nach einem der Ansprüche 1 bis 18, **dadurch gekennzeichnet, dass** die erste und/oder zweite Führungsbuchse (7; 21) dauergeschmiert ist und/oder Schmiernuten und/oder Schmiertaschen aufweist.

20. Elektrische Servolenkung nach einem der Ansprüche 1 bis 19, **dadurch gekennzeichnet, dass** die erste und/oder zweite Führungsbuchse (7; 21) aus einem Kunststoff oder Verbundwerkstoff aus Metall und Kunststoff oder aus Metall gebildet ist.

21. Elektrische Servolenkung nach einem der Ansprüche 1 bis 20, **dadurch gekennzeichnet, dass** an den axialen Enden des Lenkgetriebegehäuses (2) je eine Führungsbuchse (7; 21) angeordnet ist.

## Claims

1. Electric power steering system, in particular power assistance steering system for a vehicle, having a steering gear housing (2) and a housing cover (3) which forms an axial closure of the steering gear housing (2) and is penetrated by an axially displaceable component (4) of the steering gear (5), a first guide bushing (7) for the axially displaceable component (4) being integrated into the housing cover (3) in an axially outer region (6) of the housing cover (3), **characterized by** the following features:
● a second guide bushing (21) is arranged at an axial spacing from the first guide bushing (7)
● in that the cross-sectional profile of the first and/or second guide bushing (7; 21) is formed in such a way that a linear contact of the axially displaceable component (4) is made possible.

2. Electric power steering system according to Claim 1, **characterized in that** the first guide bushing (7) is cast together with the housing cover (3) as an insert part (8) in a casting mould for the housing cover (3).

3. Electric power steering system according to either of Claims 1 and 2, **characterized in that** the first guide bushing (7) is integrated into the housing cover (3) and/or into the steering gear housing (2).

4. Electric power steering system according to one of Claims 1 to 3, **characterized in that** the first and/or second guide bushing (7; 21) are/is formed in one piece.

5. Electric power steering system according to one of Claims 1 to 4, **characterized in that** the first guide bushing (7) forms an axial stop for the axially displaceable component (4).

6. Electric power steering system according to one of Claims 1 to 5, **characterized in that** the first and/or second guide bushing (7; 21) have/has a ratio of their/its guide diameter (D) to the width (b) of from 0.3 to 3.5.

7. Electric power steering system according to one of Claims 1 to 6, **characterized in that** the first and/or second guide bushing (7; 21) have/has a ratio of their/its wall thickness (W) to their/its external diameter (D_{A}) of from 0.01 to 0.3.

8. Electric power steering system according to one of Claims 1 to 7, **characterized in that** the first and/or second guide bushing (7; 21) are/is mounted in a radially elastic manner.

9. Electric power steering system according to one of Claims 1 to 8, **characterized in that** the first and/or second guide bushing (7; 21) are/is arranged in the housing cover (3) and/or in the steering gear housing (2) such that they/it can be positioned and fixed in the radial direction with respect to the axially displaceable component (4).

10. Electric power steering system according to Claim 9, **characterized in that** the first and/or second guide bushing (7; 21) are/is positioned with the aid of a device for fixing the radial position.

11. Electric power steering system according to Claim 10, **characterized in that** the device for fixing the radial position is formed from at least three setting screws which act in the radial direction on the first and/or second guide bushing (7; 21).

12. Electric power steering system according to Claim 11, **characterized in that** the device is formed by one or more eccentrics.

13. Electric power steering system according to one of Claims 1 to 12, **characterized in that** the first and/or second guide bushing (7; 21) are/is clamped by way of screws in the housing cover (3) and/or in the steering gear housing (2), or is riveted, or is caulked, or is welded or is adhesively bonded.

14. Electric power steering system according to one of Claims 1 to 13, **characterized in that** a cavity which is arranged radially around the first and/or second guide bushing (7; 21) between the first and/or second guide bushing (7; 21) and the housing cover (3) and/or in the steering gear housing (2) is filled with an elastically or non-elastically solidifying compound.

15. Electric power steering system according to one of Claims 1 to 14, **characterized in that** the first and/or second guide bushing (7; 21) have/has guide faces for the axially displaceable component (4), which guide faces bring about an anti-rotation safeguard for the axially displaceable component (4).

16. Electric power steering system according to one of Claims 1 to 15, **characterized in that** the first and/or second guide bushing (7; 21) make/makes a linear contact, in the circumferential direction of their/its outer faces, of the axially displaceable component (4) with the first and/or second guide bushing (7; 21) possible, and/or make/makes a linear contact of the first and/or second guide bushing (7; 21) with the housing cover (3) or steering gear housing (2) possible.

17. Electric power steering system according to Claim 16, **characterized in that** the first and/or second guide bushing (7; 21) are/is of spherical formation.

18. Electric power steering system according to one of Claims 1 to 17, **characterized in that** the axially displaceable component (4) is driven by an electric servomotor (10) via a recirculating ball mechanism (9), and the crown circle of the recirculating ball mechanism (9) is formed in such a way that it serves to mount the axially displaceable component (4) radially.

19. Electric power steering system according to one of Claims 1 to 18, **characterized in that** the first and/or second guide bushing (7; 21) are/is lubricated permanently and/or have/has lubricating grooves and/or lubricating pockets.

20. Electric power steering system according to one of Claims 1 to 19, **characterized in that** the first and/or second guide bushing (7; 21) are/is formed from a plastic or composite material comprising metal and plastic, or from metal.

21. Electric power steering system according to one of Claims 1 to 20, **characterized in that** in each case one guide bushing (7; 21) is arranged at the axial ends of the steering gear housing (2).

## Revendications

1. Servo-direction électrique, en particulier direction assistée d'un véhicule, comprenant un boîtier de mécanisme de direction (2) et un couvercle de boîtier (3) formant une fermeture axiale du boîtier de mécanisme de direction (2), qui est traversé par un composant (4) du mécanisme de direction (5) déplaçable axialement, dans laquelle, dans une région axialement extérieure (6) du couvercle de boîtier (3), un premier manchon de guidage (7) pour le composant (4) déplaçable axialement est intégré dans le couvercle de boîtier (3),
**caractérisée par** les caractéristiques suivantes :
- un deuxième manchon de guidage (21) est disposé à distance axiale du premier manchon de guidage (7),
- le profil en section transversale du premier et/ou du deuxième manchon de guidage (7 ; 21) est formé de telle sorte qu'un contact linéaire du composant (4) déplaçable axialement soit possible.

2. Servo-direction électrique selon la revendication 1, **caractérisée en ce que** le premier manchon de guidage (7) est coulé en tant que pièce d'insertion (8) avec le couvercle de boîtier (3) dans un moule de coulée pour le couvercle de boîtier (3).

3. Servo-direction électrique selon la revendication 1 ou 2, **caractérisée en ce que** le premier manchon de guidage (7) est intégré dans le couvercle de boîtier (3) et/ou dans le boîtier de mécanisme de direction (2).

4. Servo-direction électrique selon l'une quelconque des revendications 1 à 3, **caractérisée en ce que** le premier et/ou le deuxième manchon de guidage (7 ; 21) sont formés d'une seule pièce.

5. Servo-direction électrique selon l'une quelconque des revendications 1 à 4, **caractérisée en ce que** le premier manchon de guidage (7) forme une butée axiale pour le composant (4) déplaçable axialement.

6. Servo-direction électrique selon l'une quelconque des revendications 1 à 5, **caractérisée en ce que** le premier et/ou le deuxième manchon de guidage (7 ; 21) présentent un rapport de diamètre de guidage (D) à largeur (b) de 0,3 à 3,5.

7. Servo-direction électrique selon l'une quelconque des revendications 1 à 6, **caractérisée en ce que** le premier et/ou le deuxième manchon de guidage (7 ; 21) présentent un rapport d'épaisseur de paroi (W) à diamètre extérieur (D_{A}) de 0,01 à 0,3.

8. Servo-direction électrique selon l'une quelconque des revendications 1 à 7, **caractérisée en ce que** le premier et/ou le deuxième manchon de guidage (7 ; 21) sont montés de manière radialement élastique.

9. Servo-direction électrique selon l'une quelconque des revendications 1 à 8, **caractérisée en ce que** le premier et/ou le deuxième manchon de guidage (7 ; 21) sont disposés dans le couvercle de boîtier (3) et/ou dans le boîtier de mécanisme de direction (2) de manière à pouvoir être positionnés et fixés dans la direction radiale par rapport au composant (4) déplaçable axialement.

10. Servo-direction électrique selon la revendication 9, **caractérisée en ce que** le premier et/ou le deuxième manchon de guidage (7 ; 21) sont positionnés à l'aide d'un dispositif de fixation de la position radiale.

11. Servo-direction électrique selon la revendication 10, **caractérisée en ce que** le dispositif de fixation de la position radiale est constitué d'au moins trois vis de réglage qui agissent dans la direction radiale sur le premier et/ou le deuxième manchon de guidage (7 ; 21).

12. Servo-direction électrique selon la revendication 11, **caractérisée en ce que** le dispositif est formé par un ou plusieurs excentriques.

13. Servo-direction électrique selon l'une quelconque des revendications 1 à 12, **caractérisée en ce que** le premier et/ou le deuxième manchon de guidage (7 ; 21) sont serrés avec des vis, ou rivetés, ou matés ou soudés ou collés dans le couvercle de boîtier (3) et/ou dans le boîtier de mécanisme de direction (2).

14. Servo-direction électrique selon l'une quelconque des revendications 1 à 13, **caractérisée en ce qu'**une cavité disposée radialement autour du premier et/ou du deuxième manchon de guidage (7 ; 21) entre le premier et/ou le deuxième manchon de guidage (7 ; 21) et le couvercle de boîtier (3) et/ou dans le boîtier de mécanisme de direction (2) est remplie avec une composition se solidifiant de manière élastique ou non élastique.

15. Servo-direction électrique selon l'une quelconque des revendications 1 à 14, **caractérisée en ce que** le premier et/ou le deuxième manchon de guidage (7 ; 21) présentent des faces de guidage pour le composant déplaçable axialement (4), qui provoquent une fixation en rotation du composant (4) déplaçable axialement.

16. Servo-direction électrique selon l'une quelconque des revendications 1 à 15, **caractérisée en ce que** le premier et/ou le deuxième manchon de guidage (7 ; 21) permettent un appui linéaire dans la direction périphérique de leurs surfaces d'enveloppe du composant (4) déplaçable axialement contre le premier et/ou le deuxième manchon de guidage (7 ; 21) et/ou un appui linéaire du premier et/ou du deuxième manchon de guidage (7 ; 21) contre le couvercle de boîtier (3) ou le boîtier de mécanisme de direction (2).

17. Servo-direction électrique selon la revendication 16, **caractérisée en ce que** le premier et/ou le deuxième manchon de guidage (7 ; 21) sont de forme bombée.

18. Servo-direction électrique selon l'une quelconque des revendications 1 à 17, **caractérisée en ce que** le composant (4) déplaçable axialement est entraîné par le biais d'un entraînement à circulation de bille (9) par un servomoteur électrique (10) et le cercle de tête de l'entraînement à circulation de bille (9) est formé de telle sorte qu'il serve au support radial du composant déplaçable axialement (4).

19. Servo-direction électrique selon l'une quelconque des revendications 1 à 18, **caractérisée en ce que** le premier et/ou le deuxième manchon de guidage (7 ; 21) sont lubrifiés de manière durable et/ou présentent des rainures de lubrification et/ou des cavités de lubrification.

20. Servo-direction électrique selon l'une quelconque des revendications 1 à 19, **caractérisée en ce que** le premier et/ou le deuxième manchon de guidage (7 ; 21) sont formés d'un plastique ou d'un matériau composite en métallique et plastique, ou de métal.

21. Servo-direction électrique selon l'une quelconque des revendications 1 à 20, **caractérisée en ce qu'**un manchon de guidage (7 ; 21) est à chaque fois disposé aux extrémités axiales du boîtier de mécanisme de direction (2).
